# EUROPEAN PATENT SPECIFICATION

(11) **EP 0 683 719 B1**
(45) Date of publication and mention of the grant of the patent: **11.11.1998**
(21) Application number: 94905804.4
(22) Date of filing: 07.02.1994
(51) Int. Cl.: B29C 47/04, B29C 47/06, B65D 35/08

(54) **COEXTRUDED MULTILAYER SHEET, METHOD OF MANUFACTURING A TUBE FROM SUCH A SHEET, AND TUBE THEREBY PRODUCED**
KOEXTRUDIERTE MEHRSCHICHTIGE FOLIE, VERFAHREN ZUM HERSTELLEN VON TUBEN AUS EINER SOLCHEN FOLIE, UND DAMIT HERGESTELLTE TUBE
FEUILLE MULTICOUCHE COEXTRUDEE, PROCEDE DE FABRICATION D'UN TUBE A PARTIR D'UNE TELLE FEUILLE, ET TUBE AINSI OBTENU

(30) Priority: 10.02.1993 GB 9302584
(43) Date of publication of application: 29.11.1995
(73) Proprietor: Sidlaw Flexible Packaging Limited, GB-London EC4A 4HT (GB)
(72) Inventor: CUNNINGHAM, John Gerard, Chilton Polden, Somerset TA7 9EQ (GB)
(74) Representative: Hogg, Jeffery Keith
(86) International application number: GB9400231
(87) International publication number: WO9417980

(56) References cited:
- EP-A- 0 508 168
- DE-U- 9 107 812
- US-A- 3 485 912
- US-A- 3 952 676
- US-A- 5 045 264
- PATENT ABSTRACTS OF JAPAN vol. 14, no. 418 (M-1022)10 September 1990 & JP,A,02 162 027 (TOYO SEIKAN KAISHA LTD.) 21 June 1990

## Description

The present invention relates to coextruded multilayer thermoplastic sheet, to methods of making tubes from such sheet and to the tubes so made.

A method of manufacturing coextruded multilayer thermoplastic sheet is described in US-3557265, the contents of which are incorporated herein by way of reference. This method is commonly known as the feedblock/single manifold method, in which the feedblock is commonly called a Dow feedblock. Polymer melt streams are supplied from a supply head to a distribution block containing a plurality of passageways. A programming section may be provided between the supply head and the distribution block, which section serves to subdivide the melt streams and to arrange the melt streams in the desired order at the entrances to the passageways. The passageways serve to provide the desired order of layers and to provide the desired proportions of polymers in these layers. The melt streams issue from the passageways into a transition channel where they are combined into a single layered melt stream. The layered stream passes through the transition channel under laminar flow conditions and issues through an extrusion die to form the coextruded multilayered composite thermoplastic sheet. The layered stream at the point of combination is relatively deep and narrow compared with the shallow and broad extrusion die. The transition channel is of generally tetrahedral form, and serves to convert the cross-section of the layered melt stream to correspond to the cross-section of the extrusion die. The layered stream is combined at an edge of the general tetrahedron, the layers being arranged transversely to this edge and parallel to the opposing edge. The layered stream then passes through the body of the tetrahedron whereupon the layers progressively become broader and shallower, and is extruded through the extrusion die sited at the opposite edge of the tetrahedron.

Coextruded multilayer thermoplastic sheet is used commercially in packaging applications. The individual layers in such sheets are each formed of a material chosen to perform a specific function. The material of the surface layers may be chosen for its protective and decorative effect. Printed matter and decorative features are commonly applied to the outside surface of multilayer thermoplastic packaging by methods such as hot stamping or dry printing. The material of one or preferably both of the surface layers is commonly a heat-sealable thermoplastic polymer, so that the sheet can readily be formed into containers such as tubes. Examples of known heat-sealable thermoplastic polymers include polyolefins such as polyethylene and polypropylene. At least one of the surface layers may be pigmented, for example, with a white pigment such as titanium dioxide. It has generally been found advantageous to include within such sheet one or more interior layers which have barrier properties, for example, having low permeability to oxygen. This type of barrier layer serves to protect the packaged material from effects such as discolouration or change of taste caused by oxidation, and from the loss by diffusion through the sheet of essential oils and suchlike substances. Examples of known barrier materials include ethylene/vinyl alcohol copolymer (EVOH), poly(vinylidene dichloride) (PVDC) and poly(acrylonitrile) (PAN). One known type of coextruded multilayer thermoplastic sheet consists of five layers, namely the two surface layers, the barrier layer, and an adhesive layer on each side of the barrier layer. The adhesive layer provides good adhesion between the barrier layer and the respective surface layer. Another known type of coextruded multilayer thermoplastic sheet consists of three layers, namely the two surface layers and the barrier layer. This mode of construction may be used when the materials of the surface layers adhere sufficiently well to the material of the barrier layer without the use of adhesive.

Multilayer thermoplastic tubes are known, and have been used commercially for packaging materials such as toothpaste, shampoo, cosmetics and foodstuffs. Such tubes are made from the same materials and have the same arrangement of layers as the multilayer thermoplastic sheet hereinbefore described. In one known method of making such tubes, thermoplastic materials are coextruded through an annular die to form a multilayer thermoplastic cylinder. In another known way of making such tubes, a strip of multilayer thermoplastic sheet is heat-sealed along opposing edges to form a cylinder. In either case, the cylinder is then cut to length to form tube blanks. One end of the tube blank is then fitted, for example, by heat-sealing, with a head perforated by an orifice. The head has means for releasably securing a cap to cover the orifice, for example, a threaded neck. The partially-completed tube is then generally filled with the desired contents from the open other end, which is then sealed, for example. by heat-sealing, to form the completed tube. Such tubes are generally resilient, and tend to recover their original shape after deformation, for example, after being squeezed to extrude their contents.

EP-A1-508,168 and DE-G9107812.1, upon which the preambles of the independent claims 8 and 13 are based, disclose the manufacture of tubes with a clear view window. The tubes are manufactured by an extrusion process, and there is no specific disclosure as to how the window is formed.

Known multilayer thermoplastic packaging material in the form of sheet or tubes consists of layers of uniform thickness, so that the packaging materials has the same visual appearance over its whole surface. It is desirable that printed or decorative matter on the package should be legible and distinctive. It is also desirable for the user to be able to see the amount of contents remaining in the package, especially after partial use. This is especially true in the case of a resilient tube which recovers its original shape after squeezing. When the packaging material is opaque, legibility of printed or decorative matter is generally satisfactory, but the user cannot see the packaged contents. When the packaging material is clear, that is to say, transparent or translucent, the packaged contents are visible to the user, but the legibility of printed or decorative matter may be less than desired due to the clear background. Furthermore, such a filled transparent or translucent package exhibits the same colour as its contents, which is not desirable in many cases, for example, for aesthetic reasons. It is known to print solid blocks of colour or to apply coloured film over part of the surface of clear packaging material and to apply printed or decorative matter over the solid blocks. This provides packaging material which achieves the two objects of legibility and visibility, but necessitates an additional manufacturing step.

US-5045264 and US-3485912, upon which the preamble of the independent claim 1 is based, each disclose the manufacture of extruded thermoplastic sheet in which a second plastics material is co-extruded with a first plastics material so as to form strips of the second material embedded in the first material at one or both surface.

The invention provides in a first aspect a multilayer coextruded thermoplastic sheet which comprises:
(1) a first layer consisting of at least one band of a first thermoplastic polymer composition alternating with at least one hand of a second thermoplastic polymer composition, and
(2) a second layer consisting of the first thermoplastic polymer composition, the second layer adjoining the first layer, characterised in that the first thermoplastic polymer composition is clear and the second thermoplastic polymer composition is opaque.

"Adjoining" means that the first and second layers are directly adhered to and are contiguous with each other, and that there is no adhesive or other layer between them.

The first and second thermoplastic polymer compositions are preferably heat-sealable both to themselves and to each other. The first and second thermoplastic polymer compositions must adhere well to each other in a coextruded sheet to ensure good adhesion between the alternating bands and between the first and second layers. The first and second thermoplastic polymer compositions preferably consist chiefly of the same thermoplastic polymer. Such a thermoplastic polymer may in general be any of those known in the art, for example, polyolefins such as polyethylene and polypropylene, polyamides and polycarbonates.

The first polymer composition is generally unpigmented. The second thermoplastic polymer composition is preferably pigmented, for example, with a white pigment such as titanium dioxide. Alternatively, the second thermoplastic polymer composition may be a naturally opaque material, for example, a blend of polyethylene and polypropylene.

The invention is not limited by the absolute or relative widths of the alternating bands. In a preferred embodiment of the first aspect of the invention, the opaque bands are relatively wide compared with the clear bands, For example, the minimum ratio of the width of an opaque band to that of a clear band may be 70:30 or greater, preferably 80:20 or greater, and the maximum ratio may be 95:5, or less, preferably 90:10 or less. The width of a clear band may, for example, be in the range 5 to 40 mm or 10 to 20 mm.

A preferred type of sheet according to the first aspect of the invention consists of six layers arranged in the following order:
(1) Alternating bands of first (clear) and second (opaque) thermoplastic polymer compositions;
(2) First (clear) thermoplastic polymer composition;
(3) Adhesive;
(4) Barrier polymer;
(5) Adhesive; and
(6) Clear thermoplastic polymer composition.

A particularly preferred type of sheet according to the first aspect of the invention consists of six layers arranged in the following order:
(1) Alternating bands of (a) clear polyethylene and (b) polyethylene pigmented with 2 to 10%, preferably about 4%, by weight titanium dioxide, the layer being 50-250 micron, preferably 100-150 micron, thick;
(2) Clear polyethylene, 30-150 micron, preferably 75-150 micron, thick;
(3) Adhesive, 5-20 micron, preferably 10-20 micron, thick;
(4) Barrier layer of EVOH, 5-40 micron, preferably 15-40 micron, thick;
(5) Adhesive, 5-20 micron, preferably 10-20 micron, thick; and
(6) Clear polyethylene, 50-250 micron, preferably 100-150 micron, thick.

Another type of sheet according to the first aspect of the invention consists of six layers arranged in the following order:
(1) First (clear) thermoplastic polymer composition;
(2) Alternating bands of first (clear) and second (opaque) thermoplastic polymer compositions;
(3) Adhesive;
(4) Barrier polymer;
(5) Adhesive; and
(6) Clear thermoplastic polymer composition.

The clear thermoplastic polymer composition of layer (6) is preferably the same composition as the first polymer composition of layers (1) and (2).

One or both layers of adhesive may be omitted if the barrier polymer adheres sufficiently well to the neighbouring polymer composition.

A sheet according to the first aspect of the invention generally exhibits a plurality of alternating bands. It is generally cut into strips for further processing. These strips are particularly suited for the manufacture of multilayer thermoplastic tubes whose external surface exhibits alternating bands which are visibly different in appearance.

The invention accordingly provides in a second aspect a method of manufacturing a tube including the step of heat-sealing together so as to form the tube the opposing edges of a multilayer coextruded thermoplastic sheet which is characterised in that it comprises:
(1) a first layer consisting of at least one band of the first thermoplastic polymer composition alternating with at least one band of a second thermoplastic polymer composition, and
(2) a second layer consisting of the first thermoplastic polymer composition, the second layer adjoining the first layer,

The opposing edges of the sheet are preferably first overlapped and then heat-sealed.

The method may further include the subsequent step of fixing a head on one end of the tube, the head having an orifice therethrough and means thereon for releasably securing a closure thereto. The head may be of plastics material fixed to the tube by the known method of heat-sealing. After fixing the head on one end of the tube, the tube can be filled with the desired contents through the other open end, and the open end sealed to provide a completed tube.

The method may further include the step of cutting a wider sheet into narrower sheet or strips before the heat-sealing step.

The invention provides in a third aspect a tube having a cylindrical body of multilayer composite thermoplastic sheet which is characterised in that it comprises:
(1) a first layer consisting of at least one band of the first thermoplastic polymer composition alternating with at least one band of a second thermoplastic polymer composition, and
(2) a second layer consisting of the first thermoplastic polymer composition, the second layer adjoining the first layer, the first thermoplastic polymer composition being clear and the second thermoplastic polymer composition being opaque.
the body exhibiting an axial heat-seal line. The tube according to this third aspect of the invention is manufactured according to the second aspect of the invention.

The tube may additionally comprise a head fixed to one end of the tube body, the head having an orifice therethrough and means thereon for releasably securing a closure thereto. The head may be fitted for example with a threaded section capable of receiving a screw cap.

The alternating bands are preferably aligned axially along the tube.

The alternating bands are visible from the exterior of the tube and are of different visual appearance. In a preferred embodiment of the third aspect of the invention, a single band of each of the first and second polymer compositions is visible from the exterior of the tube. The exterior of the tube preferably exhibits a single clear band surrounded by a wider band of opaque, for example white pigmented, material. The width of the clear band may for example be in the range 5 to 20 mm. The diameter of the tube may for example and without limitation be in the range 20 mm to 50 mm.

When the tube exhibits a single band of each of the first and second polymers, the strip used to manufacture the tube may either contain a single band of each of the first and second polymer compositions or contain two bands of one polymer composition divided by a single band of the other polymer composition. A sheet containing a plurality of alternating bands may be cut to form such strips in a variety of ways, as will more particularly be described hereinafter.

The invention is now described more particularly with reference to the accompanying drawings, in which like reference figures are used to refer to like features:
Figure 1 shows an exploded and partially sectioned view of one form of modular feedblock and single manifold die designed according to the prior art to produce a five-layer coextrusion of three polymers.
Figure 2 shows an exploded view of an alternative form of modular feedblock designed according to the prior art to produce a five-layer coextrusion of three polymers.
Figure 3 represents the cross-section of one type of coextruded multilayer thermoplastic sheet according to the prior art.
Figure 4 represents one embodiment of a coextruded multilayer thermoplastic sheet according to the invention.
Figure 5 represents an alternative embodiment of a coextruded multilayer thermoplastic sheet according to the invention.
Figures 6 to 9 depict four alternative ways of cutting the sheet of Figure 4 into strips.
Figure 10 shows the opposing edges of a strip cut from a sheet according to Figure 9 overlapped in preparation for heat-sealing to form a tube.
Figure 11 shows a side view of a multilayered composite longitudinally heat-sealed thermoplastic tube according to the invention.
Figure 12 shows a cross-sectional view of the tube of Figure 11 along line XII-XII.

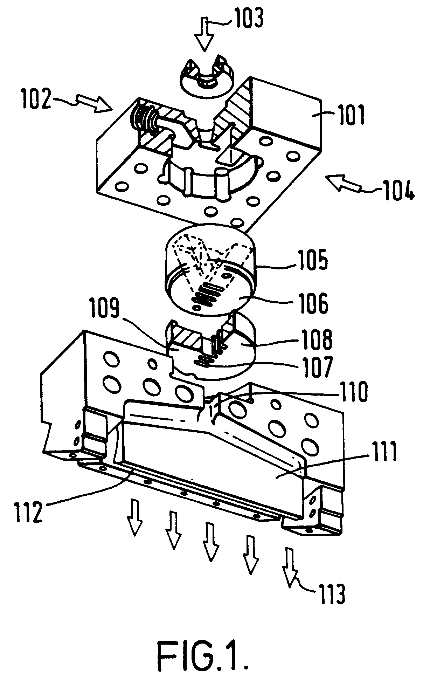

Referring to Figure 1, a supply head 101 is supplied with melt streams of a thermoplastic polymer T, a barrier polymer B and an adhesive A as indicated by arrows 102, 103 and 104 (not necessarily respectively). The melt streams are fed individually into a programming section 105 which serves to subdivide the streams of thermoplastic polymer T and of adhesive A each into two streams, and which arranges the resulting total of five melt streams into the desired order T-A-B-A-T at its delivery face 106. The five melt streams pass from programming section 105 through delivery face 106 into an array of five generally rectangular channels indicated generally as 107 in distribution block 108. The ordered melt streams after passage through channels 107 emerge through outlet face 109 of block 108 whereupon they are combined into a single layered stream in combination channel 110. The layered stream passes from combination channel 110 through coathanger-section die 111 under laminar flow conditions and is extruded between die lips 112 in the direction generally indicated by arrows 113 to form a five layer coextrusion in which the layers remain arranged in the order T-A-B-A-T hereinbefore mentioned. The cross-section of each layer within the coextrusion viewed in the direction of arrows 113 has the form of a broad and shallow rectangle. The layered stream is deformed by passage through die 111 so that each layer within the stream becomes uniformly broader and thinner corresponding to the dimensions of the rectangle defined by die lips 112. For example, the ratio of the width of a layer at die lips 112 to that of the same layer at outlet face 109 may be in the range 10:1 to 20:1, and correspondingly the ratio of the thickness of a layer at die lips 112 to that of the same layer at outlet face 109 may be in the range 1:10 to 1:20.

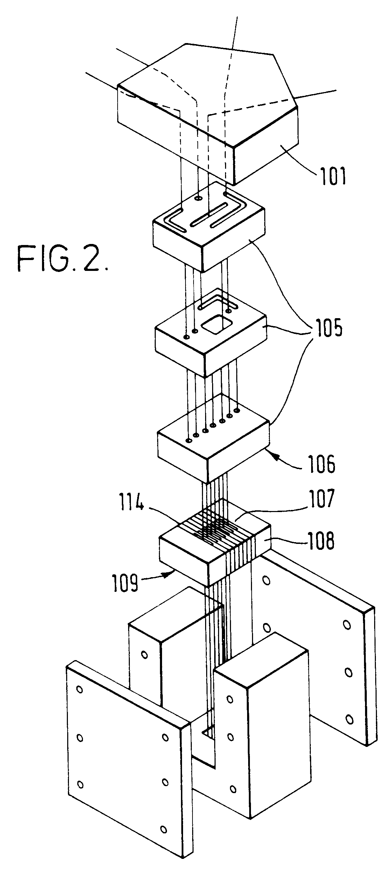

Referring to Figure 2, a supply head 101 is supplied with melt streams of a thermoplastic polymer T, a barrier polymer B and an adhesive A. The melt streams are fed individually into a programming section 105 which serves to subdivide and arrange the melt streams into a total of seven melt streams in the order T-T-A-B-A-T-T at a delivery face 106. The seven melt streams pass from programming section 105 through delivery face 106 into an array of seven generally rectangular channels indicated generally as 107 in distribution block 108. Channels 107 are separated by metal lamellae 14. The ordered melt streams after passage through channels 107 emerge through outlet face 109 of block 108 whereupon they are combined into a single layered stream. The pairs of outermost layers on both sides of this stream consist of the same material T, and each pair combines on emergence through outlet face 109 so that the single layered stream consists of five layers arranged in the order T-A-B-A-T. This arrangement allows for good control of shear and flow of the melt streams when, as is common, the outer (thermoplastic polymer composition) layers are the thickest layers in a coextruded sheet. Variations of this arrangement are known. For example, programming section 105 may subdivide and arrange the melt streams into a total of eleven melt streams in the order T-T-T-T-A-B-A-T-T-T-T, which melt streams combine on emergence through outlet face 109 to form a single layered melt stream consisting as before of the five layers T-A-B-A-T.

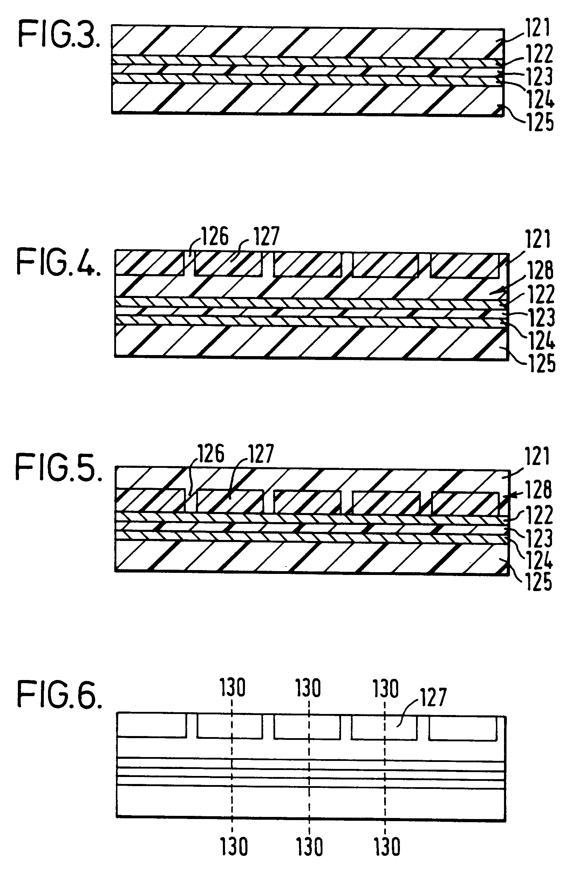

Referring to Figure 3, a coextruded multilayer thermoplastic sheet according to the prior art consists of five layers of uniform thickness arranged in the following order:
(1) Upper layer 121 of polyethylene pigmented with titanium dioxide, 50-250 micron, commonly 100-150 micron, thick;
(2) Layer 122 of adhesive, 5-20 micron, commonly 10-20 micron, thick;
(3) Interior barrier layer 123 of EVOH, 5-40 micron commonly 15-40 micron, thick;
(4) Layer of 124 of adhesive, 5-20 micron, commonly 10-20 micron, thick; and
(5) Lower layer 125 of clear polyethylene, 50-250 micron, commonly 100-150 micron, thick.

Referring to Figure 4, a coextruded multilayer thermoplastic sheet according to one embodiment of the invention consists of six layers of uniform thickness arranged in the following order:
(1) Upper layer 121 consisting of clear bands 126 of clear polyethylene alternating with opaque bands 127 of pigmented polyethylene (containing up to 4% by weight titanium dioxide), the layer being 50-250 micron, preferably 100-150 micron, thick;
(2) Underlying layer 128 of clear polyethylene, 30-150 micron, preferably 75-150 micron, thick;
(3) Layer 122 of adhesive, 5-20 micron, preferably 10-20 micron, thick;
(4) Interior barrier layer 123 of EVOH, 5-40 micron, preferably 15-40 micron, thick;
(5) Layer 124 of adhesive, 5-20 micron, preferably 10-20 micron, thick; and
(6) Lower layer 125 of clear polyethylene, 50-250 micron, preferably 100-150 micron, thick.

Referring to Figure 5, of a coextruded multilayer thermoplastic sheet according to an alternative embodiment of the invention consists of six layers of uniform thickness arranged in the following order:
(1) Upper layer 121 of clear polyethylene, 75-100 micron thick;
(2) Underlaying layer 128 consisting of clear bands 126 of clear polyethylene alternating with opaque bands 127 of pigmented polyethylene (containing up to 4% by weight titanium dioxide, 100-150 micron thick;
(3) Layer 122 of adhesive, 10 to 20 micron thick;
(4) Interior barrier layer 123 of EVOH, 15 to 40 micron thick;
(5) Layer 124 of adhesive, 10 to 20 micron thick; and
(6) Lower layer 125 of clear polyethylene, 100 to 150 micron thick.

The visual appearance of the sheets of both Figures 4 and 5 is of narrower clear bands 126 alternating with wider opaque bands 127. The visual appearance of the embodiment shown in Figure 4 may be superior to that shown in Figure 5 because of the presence of pigment in the upper layer, and may accordingly be preferred.

Coextruded multilayer thermoplastic sheet according to the invention generally contains a plurality of alternating bands of clear and opaque appearance, as shown in Figures 4 and 5. Such sheet may be cut longitudinally into strips suitable for the manufacture of tubes containing a single clear and a single opaque band. Figures 6 to 9 show a number of ways in which this may be done.

In figure 6, the sheet is cut down the middle of the wider opaque bands 127 as indicated by dotted lines 130-130. This method allows the manufacture of a tube which exhibits a clear stripe free of any heat-seal line.

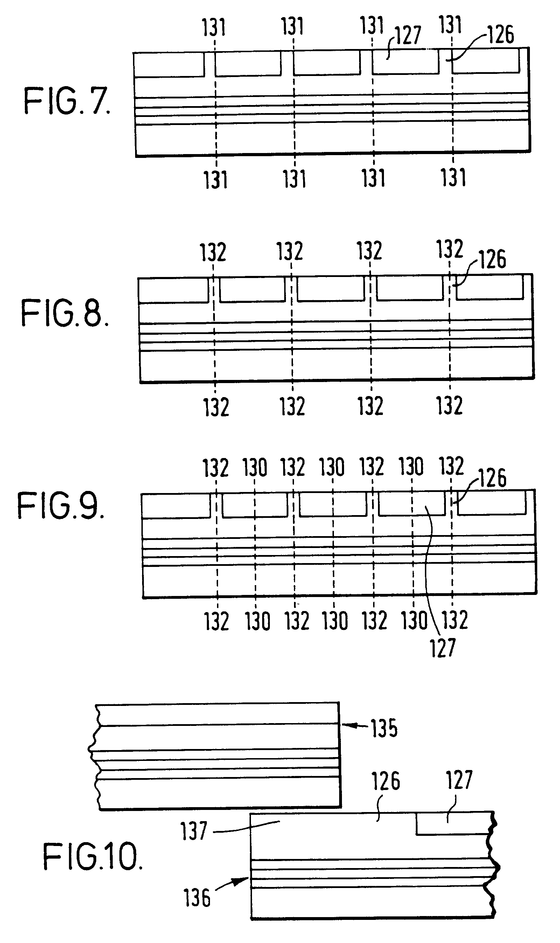

In figure 7, the sheet is cut down alternate interfaces between wider opaque bands 127 and narrower clear bands 126 as indicated by dotted lines 131-131. This method permits trimming of both the opaque and clear portions of a cut strip to a desired width.

In Figure 8, the sheet is cut down the middle of the narrower clear bands 126 as indicated by dotted lines 132-132. This method permits trimming of the clear portions of a cut strip to a desired width and allows the manufacture of a tube which exhibits a clear stripe containing a heat-seal line.

In Figure 9, the sheet is cut down the middle both of the wider opaque bands 127 as indicated by dotted lines 130-130 and of the narrower clear bands 126 as indicated by dotted lines 132-132. This method permits trimming of both the opaque and clear portions of a cut strip to a desired width. This method has the particular advantage that the width of clear bands 126 in the sheet is at least twice the width of the clear band in the cut strip and in a tube formed therefrom. As hereinbefore mentioned, the ratio of the width of a melt stream layer on extrusion through die lips to that of the same layer at the point of combination of the layered melt stream is commonly in the range 10:1 to 20:1. This may cause engineering or production difficulties when it is desired to make a tube containing a narrow clear band, for example 5 or 10 mm wide. The method of cutting depicted in Figure 9 alleviates these difficulties while minimising the amount of trimming required, and is accordingly a preferred method.

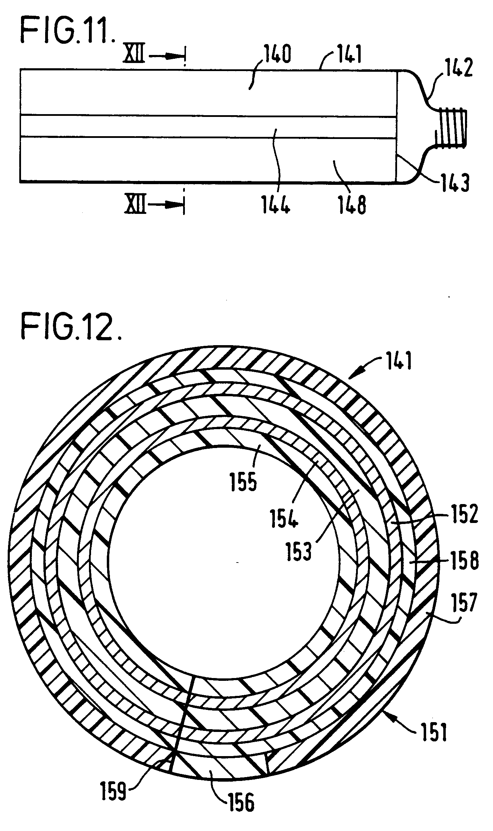

Figure 10 shows the opposing edges of a strip cut according to the method depicted in Figure 9, in which the strip has been rolled into a cylinder and the opposing edges of the strip overlapped in preparation for heat-sealing. First edge portion 135 corresponds to a cut through an opaque band as indicated in Figure 9 by dotted lines 130-130. second edge portion 136 corresponds to a cut through a clear band as indicated in Figure 9 by dotted lines 132-132. First edge portion 135 and second edge portion 136 are overlapped so that the lower layer of first edge portion 135 is in contact with the upper layer of second edge portion 136. The upper layer of the sheet having edge portions 135 and 136 forms the exterior of the cylinder. The outermost region 137 of clear band 126 in second edge portion 136 is therefore overlaid by opaque first edge portion 135, and in consequence the width of the clear band in the cylinder and in the tube formed by heat-sealing is narrower than the width of clear band 126 in the cut strip. This method of sealing is of particular advantage when it is desired to make a tube containing a narrow clear band. For example, the clear band in the extruded sheet may be 20 mm wide. The clear band in the cut strip will be of half this width, namely 10 mm. The edge portions of the strip may be overlapped by 5 mm. In consequence, the clear band in the tube will be 5 mm wide.

Figure 11 shows a side view of a multilayered composite longitudinally heat-sealed thermoplastic tube according to the invention. Generally cylindrical tube 140 consists of tube body 141 and head 142. Body 141 and head 142 are heat-sealed together along circumferential line 143. The diameter of body 141 is approximately 35 mm. Body 141 exhibits longitudinal clear band or stripe 144 of width 3 mm. The contents of the tube can be seen through clear stripe 144 and the underlying clear layers. The remainder of the exterior of body 141, indicated as 145, is opaque. Head 142 has an axial orifice therethrough (not shown) and carries threaded portion 146 for attachment of a screw cap (not shown) so as to seal the orifice.

Figure 12 shows a cross-sectional view of the multilayered tube body 141 shown in Figure 11 along line XII-XII. Innermost layer 155 is an annulus of clear polyethylene 125 micron thick. Innermost layer 155 is overlaid by and adjoins first annular adhesive layer 154 which is 15 micron thick. First adhesive layer 154 is directly overlaid by and adjoins interior barrier layer 153 which is an annulus of EVOH 25 micron thick. Adhesive layer 154 serves to bond innermost layer 155 to barrier layer 153. Barrier layer 153 is directly overlaid by and adjoins second annular adhesive layer 152 which is 15 micron thick. Second adhesive layer 152 is directly overlaid by and adjoins annular underlying layer 158 which consists of clear polyethylene. Adhesive layer 152 serves to bond barrier layer 153 to underlying layer 158. Underlying layer 158 is directly overlaid by and adjoins outer layer 151 which is 100 micron thick. Outer layer 151 is an annulus which consists of opaque band 157 of polyethylene pigmented with up to 4% by weight titanium dioxide extending over approximately 350° of arc and clear band 156 of polyethylene extending over the remainder of the annulus. Tube body 141 exhibits heat-seal line 159 extending radially through the tube and axially along the tube at one of the two interfaces between opaque band 157 and clear band 156. Heat-seal line is shown schematically, and is preferably an overlapped heat seal on the type described hereinabove with regard to Figure 10.

## Claims

1. A multilayer coextruded thermoplastic sheet which comprises:
(1) a first layer (121) consisting of at least one band (126) of a first thermoplastic polymer composition alternating with at least one band (127) of a second thermoplastic polymer composition; and
(2) a second layer (128) consisting of the first thermoplastic polymer composition, the second layer (128) adjoining the first layer (121); characterised in that the first thermoplastic polymer composition is clear and the second thermoplastic polymer composition is opaque.

2. A sheet according to claim 1, where the first and second thermoplastic polymer compositions are heat-sealable both to themselves and to each other.

3. A sheet according to claim 1 or claim 2, wherein the first and second thermoplastic polymer compositions consist chiefly of the same thermoplastic polymer.

4. A sheet according to any of the preceding claims, wherein the second thermoplastic polymer composition is pigmented.

5. A sheet according to claim 4, wherein each at least one band (126) of the first thermoplastic polymer composition is relatively narrow compared with each at least one band (127) of the second thermoplastic polymer composition.

6. A sheet according to any preceding claim, which consists of six layers arranged in the following order:
(1) Alternating bands (126,127) of first and second thermoplastic polymer compositions;
(2) First thermoplastic polymer composition (128);
(3) Adhesive (122);
(4) Barrier polymer (123);
(5) Adhesive (124); and
(6) Clear thermoplastic polymer composition (125).

7. A sheet according to claim 6, which consists of six layers arranged in the following order:
(1) Alternating bands of (a) clear polyethylene (126) and (b) polyethylene (127) pigmented with 2 to 10 percent by weight titanium dioxide, the layer being 50 to 250 micron thick;
(2) Clear polyethylene (128), 30 to 150 micron thick;
(3) Adhesive (122), 50 to 20 micron thick;
(4) Barrier layer (123) of EVOH, 5 to 40 micron thick;
(5) Adhesive (124), 5 to 20 micron thick; and
(6) Clear polyethylene (125), 50 to 250 micron thick.

8. A method of manufacturing a tube including the step of heat-sealing together so as to form the tube the opposing edges of a multilayer coextruded thermoplastic sheet which is characterised in that the sheet comprises:
(1) a first layer (121) consisting of at least one band (126) of first thermoplastic polymer composition alternating with at least one band (127) of a second thermoplastic polymer composition, and
(2) a second layer (128) consisting of the first thermoplastic polymer composition, the second layer (128) adjoining the first layer (121); the first thermoplastic polymer composition being clear and the second thermoplastic polymer composition being opaque.

9. A method according to claim 8, additionally including the preceding step of cutting a wider sheet containing a plurality of bands into a narrower sheet containing a lesser number of bands, the heat-sealing step being then carried out on the edges of the narrower sheet.

10. A method according to claim 9, wherein the wider sheet is cut both through each band of the first thermoplastic polymer composition and through each band of a second thermoplastic polymer composition to provide a narrower sheet containing in the first layer a single band of each of the first and second thermoplastic polymer compositions.

11. A method according to claim 10, wherein the heat-sealing step is carried out on overlapped opposing edges (135,136) of the sheet whereby the first and second thermoplastic polymer compositions each form a portion of the circumference of the tube without overlap.

12. A method according to any of claims 8 to 11, additionally including the subsequent step of fixing a head (142) on one end of the tube, the head having an orifice therethrough and means thereon for releasably securing a closure thereto.

13. A tube having a cylindrical body of multilayer composite thermoplastic sheet which is characterised in that the sheet comprises:
(1) a first layer (121) consisting of at least one band (126) of the first thermoplastic polymer composition alternating with at least one band (127) of a second thermoplastic polymer composition; and
(2) a second layer (128) consisting of the first thermoplastic polymer composition, the second layer (128) adjoining the first layer (121); the first thermoplastic polymer composition being clear and the second thermoplastic polymer composition being opaque; and
the body exhibiting an axial heat-seal line.

14. A tube according to claim 13, wherein a single band of each of the first and second polymer compositions is visible from the exterior of the tube.

15. A tube according to claim 13 or claim 14, wherein each band is aligned axially along the tube.

16. A tube as claimed in any one of claims 13 to 15 in which:
(1) the first layer is of a uniform thickness and consists of multiple bands of a first thermoplastic polymer composition alternating regularly with multiple bands of a second thermoplastic polymer composition across the whole of the width of the sheet; and
(2) the second layer is of a uniform thickness and consists of the first thermoplastic polymer composition, the second layer adjoining the first layer across the whole of the width of the sheet, and the first and second layers adhering well to one another.

17. A tube as claimed in any one of claims 13 to 16 in which the tube is a packaging tube.

18. A sheet as claimed in any one of claims 1 to 7 in which:
(1) the first layer is of a uniform thickness and consists of multiple bands of a first thermoplastic polymer composition alternating regularly with multiple bands of a second thermoplastic polymer composition across the whole of the width of the sheet; and
(2) the second layer is of a uniform thickness and consists of the first thermoplastic polymer composition, the second layer adjoining the first layer across the whole of the width of the sheet.

19. A method as claimed in any one of claims 8 to 12 in which:
(1) the first layer is of a uniform thickness and consists of multiple bands of a first thermoplastic polymer composition alternating regularly with multiple bands of a second thermoplastic polymer composition across the whole of the width of the sheet; and
(2) the second layer is of a uniform thickness and consists of the first thermoplastic polymer composition, the second layer adjoining the first layer across the whole of the width of the sheet.

20. A method of manufacturing a multilayer thermoplastic sheet which comprises coextruding:
(1) a first layer of a uniform thickness which consists of multiple bands of a first thermoplastic polymer composition alternating regularly with multiple bands of a second thermoplastic polymer composition across the whole of the width of the sheet; and
(2) a second layer of a uniform thickness which consists of the first thermoplastic polymer composition, the second layer adjoining the first layer across the whole of the width of the sheet, the first thermoplastic polymer composition being clear and the second thermoplastic polymer composition being opaque.

21. A method as claimed in any one of claims 8 to 10, or 19, in which the tube is a packaging tube.

## Patentansprüche

1. Coextrodierte mehrschichtige thermoplastische Folie, welche umfaßt:
(1) eine erste Schicht (121) bestehend aus wenigstens einem Band (126) einer ersten thermoplastischen Polymerkomposition abwechselnd mit wenigstens einem Band (127) einer zweiten thermoplastischen Polymerkomposition; und
(2) eine zweite Schicht (128) bestehend aus der ersten thermoplastischen Polymerkomposition, wobei die Zweite Schicht (128) an die erste Schicht (121) angrenzt;
dadurch gekennzeichnet,
daß die erste thermoplastische Polymerkomposition durchsichtig und die zweite thermoplastische Polymerkomposition undurchsichtig ist.

2. Folie nach Anspruch 1, wobei die ersten und zweiten thermoplastischen Polymerkompositionen durch Hitze sowohl selbst als auch miteinander abdichtbar sind.

3. Folie nach Anspruch 1 oder 2, wobei die ersten und zweiten thermoplastischen Polymerkompositionen hauptsächlich aus dem gleichen thermoplastischen Polymer bestehen.

4. Folie nach irgendeinem der vorhergehenden Ansprüche, wobei die zweite thermoplastische Polymerkomposition pigmentiert ist.

5. Folie nach Anspruch 4, wobei jedes wenigstens eine Band (126) der ersten thermoplastischen Polymerkomposition relativ schmal im Vergleich mit jedem wenigstens einen Band (127) der zweiten thermoplastischen Polymerkomposition ist.

6. Folie nach irgendeinem vorhergehenden Anspruch, welche aus sechs Schichten besteht, die in der folgenden Reihenfolge angeordnet sind:
(1) abwechselnde Bänder (126,127) von ersten und zweiten thermoplastischen Polymerkompositionen;
(2) die erste thermoplastische Polymerkomposition (128);
(3) ein Kleber (122);
(4) ein Grenzpolymer (123);
(5) ein Kleber (124); und
(6) eine durchsichtige thermoplastische Polymerkomposition (125).

7. Folie nach Anspruch 6, welche aus sechs Schichten besteht, die in der folgenden Reihenfolge angeordnet sind:
(1) abwechselnde Bänder aus (a) durchsichtigem Polyethylen (126) und (b) Polyethylen (127) pigmentiert mit 2 bis 10 Gew.-% Titandioxyd, wobei die Schicht 50 bis 250µm dick ist;
(2) durchsichtiges Polyethylen (128) mit einer Dicke von 30 bis 150µm;
(3) ein Kleber (122) mit einer Dicke von 50 bis 20µm;
(4) eine Grenzschicht (123) aus EVOH mit einer Dicke von 5 bis 40µm;
(5) ein Kleber (124) mit einer Dicke von 5 bis 20µm; und
(6) durchsichtiges Polyethylen (125) mit einer Dicke von 50 bis 250µm.

8. Verfahren Zur Herstellung einer Tube, umfassend den Schritt der Wärmeabdichtung der gegenüberliegenden Kanten einer mehrschichtigen coextrudierten thermoplastischen Folie miteinander, um die Tube zu bilden, welche dadurch gekennzeichnet ist, daß die Folie umfaßt:
(1) eine erste Schicht (121) bestehend aus wenigstens einem Band (126) einer ersten thermoplastischen Polymerkomposition, die sich mit wenigstens einem Band (127) einer zweiten thermoplastischen Polymerkomposition abwechselt, und
(2) eine zweite Schicht (128) bestehend aus der ersten thermoplastischen Polymerkomposition, wobei die zweite Schicht (128) an die erste Schicht (121) angrenzt; wobei die erste thermoplastische Polymerkomposition durchsichtig und die zweite thermoplastische Polymerkomposition undurchsichtig ist.

9. Verfahren nach Anspruch 8, zusätzlich umfassend den vorangehenden Schritt des Schneidens einer weiteren Folie, die mehrere Bänder enthält in eine schmalere Folie, die eine geringere Anzahl von Bändern enthält, wobei der Wärme-Abdichtschritt an den Kanten der schmaleren Folie ausgeführt wird.

10. Verfahren nach Anspruch 9, wobei die breitere Folie sowohl durch jedes Band der ersten thermoplastischen Polymerkomposition als auch durch jedes Band der zweiten thermoplastischen Polymerkomposition geschnitten wird, um eine schmalere Folie vorzugeben, die in der ersten Schicht ein einziges Band von jeder der ersten und zweiten thermoplastischen Polymerkompositionen enthält.

11. Verfahren nach Anspruch 10, wobei der Wärme-Abdichtschritt an überlappenden gegenüberliegenden Kanten (135,136) der Folie ausgeführt wird, wobei die ersten und zweiten thermoplastischen Poymerkompositionen jeweils einen Teil des Umlanges der Tube ohne Überlappung bilden.

12. Vefahren nach irgendeinem der Ansprüche 8 bis 11, zusätzlich umfassend den nachfolgenden Schritt der Befestigung eines Kopfes (142) an einem Ende der Tube, wobei der Kopf eine Mündung und Mittel besitzt, um lösbar einen Verschluß damit zu befestigen.

13. Tube mit einem zylindrischen Körper aus einer mehrschichtigen zusammengesetzten thermoplastischen Folie, welche dadurch gekennzeichnet ist, daß die Folie umfaßt:
(1) eine erste Schicht (121), bestehend aus wenigstens einem Band (126) der ersten thermoplastischen Polymerkomposition abwechselnd mit wenigstens einem Band (127) einer zweiten thermoplastischen Polymerkompositon; und
(2) eine zweite Schicht (128), bestehend aus der ersten thermoplastischen Polymerkomposition, wobei die zweite Schicht (128) an die erste Schicht (121) angrenzt; wobei die erste thermoplastische Polymerkomposition durchsichtig und die zweite thermoplastische Polymerkomposition undurchsichtig ist; und
wobei der Körper eine axiale Wärme-Abdichtlinie vorgibt.

14. Tube nach Anspruch 13, wobei ein einzelnes Band von jeder der ersten und zweiten Polymerkompositionen außen von der Tube sichtbar ist.

15. Tube nach Anspruch 13 und 14, wobei jedes Band längs der Tube axial ausgerichtet ist.

16. Tube nach irgendeinem der Ansprüche 13 bis 15, bei welcher:
(1) die erste Schicht von gleichförmiger Dicke ist und aus mehreren Bändern einer ersten thermoplastischen Polymerkomposition besteht, die sich regelmäßig mit mehreren Bändern einer zweiten thermoplastischen Polymerkomposition über die gesamte Breite der Folie abwechselt; und
(2) die zweite Schicht von einer gleichmäßigen Dicke ist und aus der ersten thermoplastischen Polymerkomposition besteht, wobei die zweite Schicht an die erste Schicht über die gesamte Breite der Folie angrenzt und die ersten und zweiten Schichten gut aneinander anhaften.

17. Tube nach irgendeinem der Ansprüche 13 bis 16, bei welchem die Tube eine Verpackungstube ist.

18. Folie, wie Sie in irgendeinem der Ansprüche 1 bis 7 beansprucht ist, bei welcher:
(1) die erste Schicht von einer gleichmäßigen Dicke ist und aus mehreren Bändern einer ersten thermoplastischen Polymerkomposition besteht, die sich regelmäßig mit mehreren Bändern einer zweiten thermoplastischen Polymerkomposition über der gesamten Breite der Folie abwechselt;
(2) die zweite Schicht von einer gleichmäßigen Dicke ist und aus der ersten thermoplastischen Polymerkomposition besteht, wobei die zweite Schicht an die erste Schicht über der gesamten Breite der Folie angrenzt.

19. Verfahren nach irgendeinem der Ansprüche 8 bis 12, bei welchem:
(1) die erste Schicht von einer gleichmäßigen Dicke ist und aus mehreren Bändern einer ersten thermoplastischen Polymerkomposition besteht, die sich regelmäßig mit mehreren Bändern einer zweiten thermoplastischen Polymerkomposition über der gesamten Breite der Folie abwechseln; und
(2) die zweite Schicht von einer gleichmäßigen Dicke ist und aus der ersten thermoplastischen Polymerkomposition besteht, wobei die zweite Schicht an die erste Schicht über der gesamten Breite der Folie angrenzt.

20. Verfahren zur Herstellung einer mehrschichtigen thermoplastischen Folie, welches das Coextrudieren umfaßt:
(1) einer ersten Schicht einer gleichmäßigen Dicke, welche aus mehreren Bändern einer ersten thermoplastischen Polymerkomposition besteht, die sich regelmäßig mit mehreren Bändern einer zweiten thermoplastischen Polymerkomposition über der gesamten Breite der Folie abwechseln; und
(2) eine zweite Schicht einer gleichmäßigen Dicke, welche aus der ersten thermoplastischen Polymerkomposition besteht, wobei die zweite Schicht an die erste Schicht über der gesamten Breite der Folie angrenzt und die erste thermoplastische Polymerkomposition durchsichtig ist und die zweite thermoplastische Polymerkomposition undurchsichtig ist.

21. Verfahren nach irgendeinem der Ansprüche 8 bis 10 oder 19, bei welchem die Tube eine Verpackungstube ist.

## Revendications

1. Feuille thermoplastique coextrudée multicouches, qui comprend :
(1) une première couche constituée d'au moins une bande (126) en une première composition polymère thermoplastique en alternance avec au moins une bande (127) en une deuxième composition polymère thermoplastique ; et
(2) une deuxième couche (128) constituée de la première composition polymère thermoplastique, la deuxième couche (128) étant contiguë à la première couche (121) ; caractérisée en ce que la première composition polymère thermoplastique est transparente et que la deuxième composition polymère thermoplastique est opaque.

2. Feuille selon la revendication 1, dans laquelle la première et la deuxième compositions polymères thermoplastiques sont thermoscellables tant à elles mêmes, que l'une à l'autre.

3. Feuille selon la revendication 1 ou 2, dans laquelle la première et la deuxième compositions polymères thermoplastiques sont constituées essentiellement du même polymère thermoplastique.

4. Feuille selon l'une quelconque des revendications précédentes, dans laquelle la deuxième composition polymère thermoplastique est pigmentée.

5. Feuille selon la revendication 4, dans laquelle la bande ou chaque bande (126) en la première composition polymère thermoplastique est relativement étroite par rapport à la bande ou à chaque bande (127) en la deuxième composition polymère thermoplastique.

6. Feuille selon l'une quelconque des revendications précédentes, qui est constituée de six couches disposées dans l'ordre suivant :
(1) des bandes (126,127), alternativement en la première et en la deuxième compositions polymères thermoplastiques ;
(2) une première composition polymère thermoplastique (128) ;
(3) un adhésif (122) ;
(4) un polymère barrière (123) ;
(5) un adhésif (124) ; et
(6) une composition polymère thermoplastique transparente (125).

7. Feuille selon la revendication 6, qui est constituée de six couches disposées dans l'ordre suivant :
(1) des bandes, en alternance (a) en un polyéthylène transparent (126) et (b) en un polyéthylène (127) pigmenté avec 2 à 10 % en poids de dioxyde de titane, la couche ayant une épaisseur de 50 à 250 µm ;
(2) un polyéthylène transparent (128), ayant une épaisseur de 30 à 150 µm ;
(3) un adhésif (122), ayant une épaisseur de 50 à 20 µm ;
(4) une couche barrière (123) en EVOH, ayant une épaisseur de 5 à 40 µm ;
(5) un adhésif (124), ayant une épaisseur de 5 à 20 µm ; et
(6) un polyéthylène transparent (125), ayant une épaisseur de 50 à 250 µm.

8. Procédé de fabrication d'un tube, comprenant l'étape de thermoscellage l'un à l'autre, de façon à former le tube, des bords opposés d'une feuille thermoplastique coextrudée multicouches, qui est caractérisé en ce que la feuille comprend :
(1) une première couche (121) constituée d'au moins une bande (126) en une première composition polymère thermoplastique, en alternance avec au moins une bande (127) en une deuxième composition polymère thermoplastique, et
(2) une deuxième couche (128) constituée de la première composition polymère thermoplastique, la deuxième couche (128) étant contiguë à la première couche (121) ; la première composition polymère thermoplastique étant transparente et la deuxième composition polymère thermoplastique étant opaque.

9. Procédé selon la revendication 8, qui comprend en outre l'étape précédente de découpe d'une feuille plus large contenant une pluralité de bandes, en une feuille plus étroite contenant un nombre plus petit de bandes, l'étape de thermoscellage étant ensuite mise en oeuvre sur les bords de la feuille la plus étroite.

10. Procédé selon la revendication 9, dans lequel la feuille la plus large est découpée tant à travers chaque bande en la première composition polymère thermoplastique qu'à travers chaque bande en une deuxième composition polymère thermoplastique, de façon à donner une feuille plus étroite contenant dans la première couche une bande unique en chacune de la première et de la deuxième compositions polymères thermoplastiques.

11. Procédé selon la revendication 10, dans lequel l'étape de thermoscellage est mise en oeuvre sur des bords opposés en chevauchement (135,136) de la feuille, la première et la deuxième compositions polymères thermoplastique formant alors chacune une portion de la circonférence du tube sans chevauchement.

12. Procédé selon l'une quelconque des revendications 8 à 11, qui comprend en outre l'étape ultérieure de fixation d'une tête (142) à une extrémité du tube, la tête étant traversée par un orifice, et portant un moyen permettant d'y assujettir une fermeture d'une manière amovible.

13. Tube ayant un corps cylindrique en une feuille thermoplastique composite multicouches, qui est caractérisé en ce que la feuille comprend :
(1) une première couche (121) constituée d'au moins une bande (126) en la première composition polymère thermoplastique en alternance avec au moins une bande (127) en une composition polymère thermoplastique ; et
(2) une deuxième couche (128) constituée de la première composition polymère thermoplastique, la deuxième couche (128) étant contiguë à la première couche (121) ; la première composition polymère thermoplastique étant transparente et la deuxième composition polymère thermoplastique étant opaque ; et
le corps présentant une ligne de thermoscellage axiale.

14. Tube selon la revendication 13, dans lequel une bande unique en chacune de la première et de la deuxième compositions polymères est visible de l'extérieur du tube.

15. Tube selon la revendication 13 ou 14, dans lequel chaque bande est axialement alignée le long du tube.

16. Tube selon l'une quelconque des revendications 13 à 15, dans lequel :
(1) la première couche a une épaisseur uniforme et est constituée de plusieurs bandes en une première composition polymère thermoplastique, régulièrement en alternance avec plusieurs bandes en une deuxième composition polymère thermoplastique, sur toute la largeur de la feuille ; et
(2) la deuxième feuille a une épaisseur uniforme et est constituée de la première composition polymère thermoplastique, la deuxième couche étant contiguë à la première couche sur toute la largeur de la feuille, et la première et la deuxième couches adhérant bien l'une a l'autre.

17. Tube selon l'une quelconque des revendications 13 à 16, dans lequel le tube est un tube d'emballage.

18. Feuille selon l'une quelconque des revendication 1 à 7, dans laquelle :
(1) la première couche a une épaisseur uniforme et est constituée de plusieurs bandes en une première composition polymère thermoplastique, régulièrement en alternance avec plusieurs bandes en une deuxième composition polymère thermoplastique, sur toute la largeur de la feuille ; et
(2) la deuxième feuille a une épaisseur uniforme et est constituée de la première composition polymère thermoplastique, la deuxième couche étant contiguë à la première couche sur toute la largeur de la feuille, et la première et la deuxième couches adhérant bien l'une à l'autre.

19. Procédé selon l'une quelconque des revendications 8 à 12, dans lequel :
(1) la première couche a une épaisseur uniforme et est constituée de plusieurs bandes en une première composition polymère thermoplastique, régulièrement en alternance avec plusieurs bandes en une deuxième composition polymère thermoplastique, sur toute la largeur de la feuille ; et
(2) la deuxième feuille a une épaisseur uniforme et est constituée de la première composition polymère thermoplastique, la deuxième couche étant contiguë à la première couche sur toute la largeur de la feuille, et la première et la deuxième couches adhérant bien l'une à l'autre.

20. Procédé de fabrication d'une feuille thermoplastique multicouches, qui consiste à coextruder :
(1) une première couche ayant une épaisseur uniforme, qui est constituée de plusieurs bandes en une première composition polymère thermoplastique, régulièrement en alternance avec plusieurs bandes en une deuxième composition polymère thermoplastique sur toute la largeur de la feuille ; et
(2) une deuxième couche ayant une épaisseur uniforme, qui est constituée de la première composition polymère thermoplastique, la deuxième couche étant contiguë à la première couche sur toute la largeur de la feuille, la première composition polymère thermoplastique étant transparente et la deuxième composition polymère thermoplastique étant opaque.

21. Procédé selon l'une quelconque des revendications 8 à 10 ou 19, dans lequel le tube est un tube d'emballage.
